# EUROPEAN PATENT APPLICATION

(11) **EP 2 498 179 A1**
(43) Date of publication of application: **12.09.2012**
(21) Application number: 11382062.5
(22) Date of filing: 09.03.2011
(51) Int. Cl.: G06F 9/44, G06F 3/048

(54) **Method for managing widgets in an electronic device to improve the user experience of the device**

(71) Applicant: Telefónica, S.A., 28013 Madrid (ES)
(72) Inventor: Schneider, Michael, 28013, Madrid (ES); Coloma, Daniel, 28013, Madrid (ES)
(74) Representative: Carpintero Lopez, Francisco

(57) **Abstract**

A method for managing widgets in an electronic processing device. The widgets are organized in widget packages or suites, where one of the widget in each suite is identified as the suite main widget, where each widget can be launched through different entry points and where each widget has a configuration document with the configuration information of each widget. The invention allows the definition of the full user experience of a device based in simple technologies, being extremely easy to change the device user experience with a minimum effort.

## Description

### TECHNICAL FIELD

The present invention relates generally to widgets managing in an electronic device and more particularly to a method for defining the full experience for a user of a device based in widgets technology.

### DESCRIPTION OF THE PRIOR ART

Generally speaking, the widgets are user interface elements that include information and one or more tools (e.g., applications) that let the user perform common tasks and provide fast access to information. Widgets can perform a variety of tasks, including without limitation, communicating with a remote server to provide information to the user (e.g. weather report), providing commonly needed functionality (e.g. a calculator) or acting as an information repository (e.g. a notebook). Widgets can be displayed an accessed through a user interface which is also referred to as a "dashboard".

W3C Web Applications Working Group has created a set of widget specifications. A widget, according to W3C terminology, is "an end-user's conceptualization of an interactive single purpose application for displaying and/or updating local data or data on the Web, packaged in a way to allow a single download and installation on a user's machine, mobile phone, or Internet-enabled device". W3C has defined a standard format to package widgets in the "Widget Packaging and Configuration" (P&C) specification (http://dev.w3.org/2006/waf/widgets/). That format is basically a zip file with no compression that that contains all the mark-up elements, style and scripts that determine the widget appearance and behavior. Additionally, the package contains a configuration document, which is xml based, which has a widget element as its root and which schema is defined in the specification. The schema defines the set of parameters that the configuration document may have such as author, version, icon... The following is an example of a widget configuration file compliant with that specification.

```
 <?xml version="1.0" encoding="UTF-8"?>
 <widget xmlns="http://www.w3.org/ns/widgets" id="widgetld" version="0.1
 viewmodes="fullscreen">
 <name>Messaging Client</name>
 <description>Messaging sending and reciving</description>
 <author email="developername@someserver.com">Developer Name</author>
 <icon src="icon.png"/>
 <content src="messaging.html"/>
 <access network="true"/>
 </widget>
```

When a widget is launched or executed, the implementation checks if the configuration document contains a "content" element (e.g. *<content src="initialPage.html"*/*>*)*,* and if so, it renders the resource identified by its attribute *(initiaIPage.html* in the example). If the configuration document does not contain a "content" element, the implementation tries to render the default initial page that is defined as *"index.html".* W3C P&C specification also describes (in section 7.3) a mechanism for extending the schema defined for the configuration document that is used in this invention. The mechanism consists in adding an extra namespace to the widget element in the configuration document apart from the widget one (http://www.w3.org/ns/widgets). So, for instance, the widget element may be:

```
 <widget xmlns="http://www.w3.org/ns/widgets" xmlns:example="http:hexample.es/">
```

Which means that apart from the widget namespace defined by W3C, the namespace with name "example" can be used in the configuration document. Elements of the example namespace will be prefixed by "example:" whereas elements of the widget namespace do not require any prefix, as it is the default one. A URI (Uniform Resource Identifier) scheme has been defined by W3C in order to allow a widget to identify resources that are available within the widget package ( W3C Widget Uri Scheme, http://www.w3.org/TF/widgets-uri/). Through this URI scheme, it is possible for a widget to access all the content that is available in the widget package.

A widget suite may be defined as a set of widgets that are installed together in an implementation. The current specification available does not allow configuring a set of widgets as a widget suite, in which, for instance, one of them is the entry point to the rest of widgets in the suite. Additionally, the current specification, limits the number of entry points to the widget (i.e. content element) to one, which is a limitation in case widgets can intercommunicate an hence invoke other widgets with different initialization instructions. A widget entry point is widget access interface (usually an HTML page) that is rendered when the widget is executed.

Although the URI scheme defined by W3C might be suitable to allow one widget to identify other widget resources, this has not been standardized as it was assumed to be outside W3C scope or focus. The specification states: *"The scheme defined in this specification could be used to implement inter-widget communication, but that is outside the scope of this current document.* ".

Spanish patent P201130023 "Widget extensions to allow widget suite initialization and intercommunication" describes a mechanism to define the concept of widget suite, that allows widgets to have multiple access points (so a widget can start in different points depending on the functionality is required from it) as well as the interaction across widgets (invoking other widgets, so that widgets in the same suite can interwork and reuse their functionality by indicating the targeted widget and the entry point or the targeted functionality).

An example of interaction across widgets can be illustrated by the following example involving a search widget, a map widget and a weather widget. When the user installs the search widget, a trigger event is generated which causes the map and the weather widgets to be automatically associated or linked to the search widget and displayed in the dashboard (user interface page) as well. A user enters a search query in a search box of the search widget to determine the location of e.g. a restaurant. The search widget returns location information for the restaurant which is searched with the map and the weather widget. The map widget uses the address to generate a map and driving directions and the weather widget uses the address to determine the current weather for the restaurant location. If said widgets are already installed and launched in the dashboard when the search widget is installed, then the links are established directly without reinstalling said widgets. If said widgets are not installed, then the widgets (map and weather) are installed and launched before or after being linked. If the widgets are not available on the computer system, a message is displayed instructing the user on how to obtain the widgets from another source. For example, the message can include a link to a website where the widgets can be downloaded.

Although some inventions are already available in the widget intercommunication area, for example patent US2007/0101291 "Linked Widgets", they are focused in defining a mechanism to allow widgets to exchange information, but not a mechanism that provides a full control of the user experience flow.

The user experience may be defined as "a person's perceptions and responses that result from the use of the device" or "all the users' preferences, perceptions, physical and psychological responses and accomplishments that occur before, during and after use". There are the three factors that influence user experience: system, user and the context of use.

Patent P201130023 allows the definition of a widget suite, however it does not permit the use of a widget suite as the mechanism to specify the full experience of a device. Some aspects required by such a solution are not specified/supported, for example:
1. The handling of incoming events such as SMS, MMS or incoming calls and how those events are forwarded to the appropriate widget.
2. The possibility to specify that some widgets are services that do not have user interface.
3. Allow some widgets to execute periodically or continuously in background.
4. Provide a mechanism to build a menu or idle screen based on the content of all the widgets in the widget suite that are intended for being accessed by the end-user.

New methods are therefore required to deal with those challenges.

### SUMMARY OF THE INVENTION

The present invention use a new method and system that will reduce or eliminate the deficiencies present on current methods.

In the present invention, it is proposed a mechanism to define the full experience of an user when using as electronic device based on Widgets technology. This invention is based on W3C Specifications and extends them (especially the W3C Widget URI Scheme) it by specifying and developing some features which will allow to reduce or eliminate the deficiencies present on current prior art methods.

In a first aspect, it is presented a method for managing widgets in an electronic processing device, where the widgets are organized in widget packages or suites, where one of the widget in each suite is identified as the suite main widget, where each widget can be launched through different entry or access points and where each widget has a configuration document with the configuration information of each widget, the method comprising the following steps:
- When the widgets suite is installed, the configuration documents of all the widgets within the suite are parsed and the information about the entry points of each widget and other configuration information which includes an indication whether said widget is the main widget or not, is stored.
- When the device is switched-on, the main widget is the first widget of the suite to be executed and it will be always running in the device, when any other widget is executed the main widget will be still running in the background and will be always accessible on the user interface main page of the device through a main widget control bar
- When it is executed, the main widget retrieves the information about all the entry points of each widget of the suite, the information about the entry points of a widget including the actions that said widget will perform when it is launched using said entry point and whether the widget wants to be shown in the user interface main page or not and which entry point wants the widget to be linked on the user interface main page.
- When the information is successfully retrieved, the main widget builts the user interface main page of the device showing at a content area of the user interface main page, an icon for each widget of the suite which has requested to be shown in the user interface main page according to the information retrieved, the icon being linked to the correspondent entry point of the widget according to the information retrieved, the icon being shown for each widget in the user interface main page in each moment is called active icon
- If a widget wants to change its active icon, the widget sends an instruction including the new active icon that the widget wants to use, and when this instruction is sent, the main widget built again the user interface main page using the new active icon for said widget
- When the user selects one of the icons that corresponds to the entry point of a certain widget, said widget is launched and the main widget built again the main user interface page rendering the selected widget in the content area of the user interface main page.
- When, triggered by certain event, a widget that is executed in the background wants to display some information to the end user, the widget sends an instruction including information describing the event, an image in case graphical information should be displayed and a link that allows end-user to access directly to the event information and the main widget displays on the main widget control bar, an alert indicating the user that said event has happened, the alert being linked to the event information and the image if any is displayed.
- When a communication event is detected, the main widget will parse the event information, detect the target widget of the event, launch the target widget if it is not being executed already, informs the target widget about the event and update the main widget control bar, displaying a link to the event information and the main widget will ask the target widget if further actions must be performed as a result of the communication event.

Finally, a computer program comprising computer program code means adapted to perform the above-described method is presented.

For a more complete understanding of the invention, its objects and advantages, reference may be had to the following specification and to the accompanying drawings.

### BRIEF DESCRIPTION OF THE DRAWINGS

To complete the description and in order to provide for a better understanding of the invention, a set of drawings is provided. Said drawings form an integral part of the description and illustrate a preferred embodiment of the invention, which should not be interpreted as restricting the scope of the invention, but rather as an example of how the invention can be embodied. The drawings comprise the following figures:
Figure 1 represents a diagram of the solution proposed in an embodiment of the present invention.
Figure 2 represents a view of the main page area in an exemplary embodiment of the present invention.
Figure 3 shows a view of the page area, when the user selects the "message composer" widget, in an embodiment of the present invention.
Figure 4 shows a view of the main page area when an event has occurred and the "requestFocus" method is invoked, in an embodiment of the present invention.
Figure 5a and 5b show a scheme of the actions and a view of the main page area respectively when an external event has occurred and the "requestFocus" method is invoked, in an embodiment of the present invention.
Figure 6 shows a scheme of the actions when an external event has occurred in an embodiment of the present invention.

Corresponding numerals and symbols in the different figures refer to corresponding parts unless otherwise indicated.

### DETAILED DESCRIPTION OF THE INVENTION

This invention is based on W3C Widget Packaging and Configuration (http://dev.w3.org/2006/waf/widgets/) and W3c Widget URI (http://www.w3.org/TR/widgets-uri/) specifications and extends them by specifying and developing the following aspects:
- A widget of the widget suite or package will be defined and identified as the main widget, so when a widget suite is executed, the implementation knows which widget should be executed first.
- The main widget of a widget suite will be always running on the device. When any other widget in the suite is being executed, the main widget will be still running in the background.
- There is a part of the device screen that will be always controlled by the main widget in order to contain shortcuts always available to the end-user (such as going back to the home screen).
- The main widget of a widget suite will be responsible for handling key device events such as incoming message (i.e. SMS, MMS or E-mail) and incoming calls.
- Any widget can have an entry point with no graphical user interface. In that way could be acting as a "service".
- Widgets may request to be shown in the user interface. This will require that widget has been allowed to do so.
- The user interface of the main widget is a set of links to all the other widgets that are part of the widget suite that have specified that they are addressable by the end user. Every widget should be able to indicate which is its default and active icons and notify the main widget about changes on the active one.

The content of the device notification bar is not managed by the widget suite. It is anticipated that the content of that notification bar could be specified by a standard mechanism such as an XML schema. However, that is beyond the scope of this invention.

An icon is a file that is used to represent the widget in various application contexts (e.g. the icon that the user activates to instantiate a widget, or an icon in a dock or task bar or some other visual context). The icon is intended to help users of visual browsers to recognize the widget at a glance. There are two kinds of icons defined by this specification, custom icons and default icons. A custom icon is an icon explicitly declared by an author via an icon element in a configuration document. A custom icon can be located at the root of the widget package, or at the root of a locale folder, or in an arbitrary folder. A default icon is a reserved icon, either at the root of the widget package or at the root of a locale folder, whose file name case-sensitively and exactly matches a file name given in the file name column of the default icons table.

While widgets suite are usually described herein with respect to a personal computer or a mobile phone, it should be apparent that the disclosed implementations can be incorporated in, or integrated with, any electronic device that is capable of using widgets, including without limitation, portable and desktop computers, servers, game devices, media players, game devices, PDAs, televisions,...

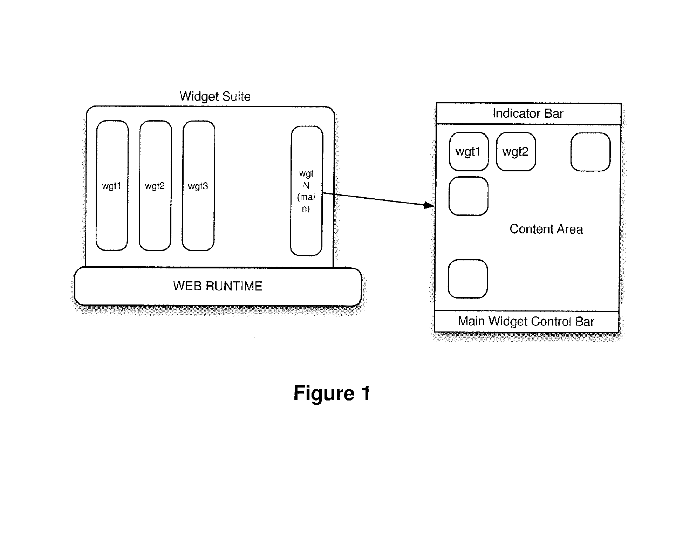

Figure 1 provides an overview of the envisioned solution, in which the main widget builds the main user interface based on the widgets that are part of the widgets suite and that indicated they should be listed in the main screen. The scenario depicted by Figure 1 may be useful in order to build all the logic and user experience of a device through a widget suite.

Hence, the method proposed in the present invention will have features related to the extension of the configuration specification and features related to the extension of the URI specifications.

The first part of the invention (set of extensions to the widget configuration document defined by the W3C Widgets Packaging and Configuration specification is achieved through the definition of a namespace in which a set of extensions to the widget configuration document is specified. As an example, this invention propose the namespace prefix owd (Open Web Device) that corresponds to the namespace httQ://owd.com, however any other namespace could be used to include those extensions.

This invention defines the possibility to specify an entry point that is not linked to an HTML resource but to a JavaScript function part of the widget package.

This is achieved through the service extension (i.e. owd:service). That extension must contain two attributes:
- A method attribute that indicates the JavaScript method to be launched when this widget is invoked with this entry point. The JavaScript method must be part of the widget package.
- A serviceld attribute that identifies the service exposed by the widget so that other widgets can launch the same widget with different entry points without knowing the details of the JavaScript implementation.

For instance, the following excerpt declares an entry point, with identifier IncomingRequest that upon request launches the method updatelndicator.

```
<owd:service method="updatelndicator()" serviceld="incomingRequest"/>
```

The service element may also have another extension defined in this invention: the owd:automaticActivation element. That element allows specifying that a service must be automatically activated when an interval of time has expired. To do so, the element has an interval attribute, that is zero in case the method must be continuously executed. If the value of the interval is different to zero, it means the number of seconds of the execution interval (e.g. the method is executed every n seconds).

The following represents a service that should be executed as soon as the device is started:

```
 <owdaervice method="updatelndicator()" serviceld="incomingRequest">
 <owd:automaticActivation interval=0>
 </owd service>
```

The following represents a service that should be executed every minute:

```
 <owd:service method="updatelndicator()" serviceld="incomingRequest">
 <owd:automaticActivation interval=60>
 </owd:service>
```

If the owd:automaticActivation element is not included in the service, then the service is never executed automatically by the WRT (Web Run Time).

The following extension required, consists in having a unique identifier for all the icons included in the configuration document. That unique identifier is determined by the owd:iconld attribute of the icon element. For instance, the following example means that there are two icons in the widget and every of them have a different identifier (read and unread):

```
 <icon src=images/messagesread.png owd:iconld="read"/>
 <icon src=images/unreadmessages.png owd:iconld="unread"/>
```

The last extension is the element owd:content, that includes three attributes to define additional entry points to the widget.

The first attribute (src) identifies the HTML content that is displayed when the widget is invoked through this entry point. The second one is an attribute that allows the widget to indicate that the entry point represented by the owd:content element should be exposed to the user as a menu item: the menultem attribute is defined. If the menultem attribute is present in the owd:content element and its value is true, that means that there should be a link in the user interface that allows end users to access directly the entry point. If the widget is shown in the main menu, the default icon that is shown to the end user in the user interface must be determined, in order to do so, the attribute iconld is also defined as an extension of the owd:content element (third element). The value of the iconld attribute should correspond to any of the owd:lconld attributes defined for an icon in the configuration document

The following example indicates that the widget entry point that links to messageList.html should be included in the list of elements shown in the main menu and that the icon to be used in included in the configuration document with the identifier (iconld) "unread":

```
 <owd:content src="messageList.html" menultem=true iconld="unread">
```

This invention also defines a set of JavaScript extensions that are required in order to achieve the intended uses:
- requestfocus(in DOMString entryPoint, in DOMString message, in DOMString icon) : This method requests to take control of the screen by requesting the main widget to invoke the entryPoint identified in the input argument This method will be typically invoked by widgets that are always On whenever they receive an event that needs end user interaction. The attributes message and icon will be used to provide textual and graphical information about the action required by the widget which requests to take control of the screen.
- changeActivelcon(in DOMString iconld): This method requests to change the active icon of a widget with the one denoted by the iconld input argument. That argument must correspond to one of the icons in the configuration document.
- onRefreshRequest(in DOMString widgetld): This listener allows the main widget to receive notifications for refresh requests. This is typically invoked by the WRT after a changeActivelcon invocation.

Another part of the invention (set of extensions to the format specified by W3C Widget Uri Scheme specification) consists in the definition of a URI scheme that allows the invocation of a widget service.

The proposal is to use the URI scheme prefix "wgtsuite". The URI should be composed by the widget identifier, followed by a slash character "/" and the desired entry point identified by the "serviceld" attribute of the targeted "wgtsuiteaervice" element.

```
 wgtsuite://<widgetid>/<serviceld>
```

In the following example, the widget id will be "example Suite/exampleWgt" and the service ID would be "incomingEvent".

```
 wgtsuite://exampleSuite/exampleWgt/incomingEvent
```

Now, the main steps of the method proposed in a embodiment of the invention will be disclosed:
**Initialization:** When the widget suite is installed (initialization phase), the Web Runtime WRT, that is the processor or application responsible for widget execution, parses all the configuration documents of all the widgets within the widget suite (N widgets) and stores the information about the different entry points of all the widgets in a table like the one depicted in table 1.

The "intent" attribute indicates the action that widget will do when it is launched through this entry point.

**Table 1**

| Widgetld | Content Src | Intent | menultem | Icon | Main |
|---|---|---|---|---|---|
| 1 | Compose.htm | SendMessage | Yes | Compose.jpg | No |
| 1 | ListMessages.htm | ListMessages | Yes | Read.jpg | No |
| ... | | | | | |
| N | Index.html | Idle Screen | No | No | Yes |

As an example, this will be the the content of the configuration documents for widget N (main widget and consequently, the widget suite entry point) according to the initialization table, in the suite "example Suite".

```
 <?xml version="1.0" encoding="UTF-8"?>
 <widget xmlns=http://www.w3.org/ns/widgets
 xmlns:owd="http://owd.com" id="exampleSuite/mainWidget" version="0.1"
 viewmodes="fullscreen">
 <name>Idle Screen</name>
 <description>Widget Suite Entry Point</description>
 <author email="developername@someserver.com">Developer Name</author>
 <icon src="idlescreen.jpg" owd:iconld="0"/>
 <content src="index.html" wgtsuite:initial="true"/>
 </widget>
```

And this will be the the content of the configuration documents for widget 1 according to the initialization table.

```
 <?xml version="1.0" encoding="UTF-8"?>
 <widget xmlns=http://www.w3.org/ns/widgets xmlns:owd="http://owd.com"
 id="exampleSuite/messagingWidget" version="0.1" viewmodes="fullscreen">
 <name>Messaging Client</name>
 <description>Messaging sending and receiving</description>
 <author email="developername@someserver.com">Developer Name</author>
 <icon src="read.jpg" owd:iconld="0"/>
 <icon src="unread.jpg" owd:iconld="1"/>
 <icon src="compose.jpg" owd:iconld ="2"/>
 <!-- Specifies the different entry points to the widget -->
 <owd:content src="compose.html" intent="sendMessage" iconld="2"
 menultem="yes"/>
 <wgtsuite:content src="IistMessages.html" intent="viewMessages" iconld="0"
 menultem="yes"/>
 <wgtsuite:service method="incomingMessage()" serviceld="incomingMessage">
 <wgtsuite:service/>
 </widget>
```

**Switching on:** When the device is switched-on, the WRT launches the main widget in a chromeless browser. That main widget retrieves the information about all the available entry points in the device through a JavaScript method exposed by the Web Runtime or directly accessing the file system. When that information is successfully retrieved, the main widget renders the main page that provides links to all the entry points that had the menultem flag set to true.

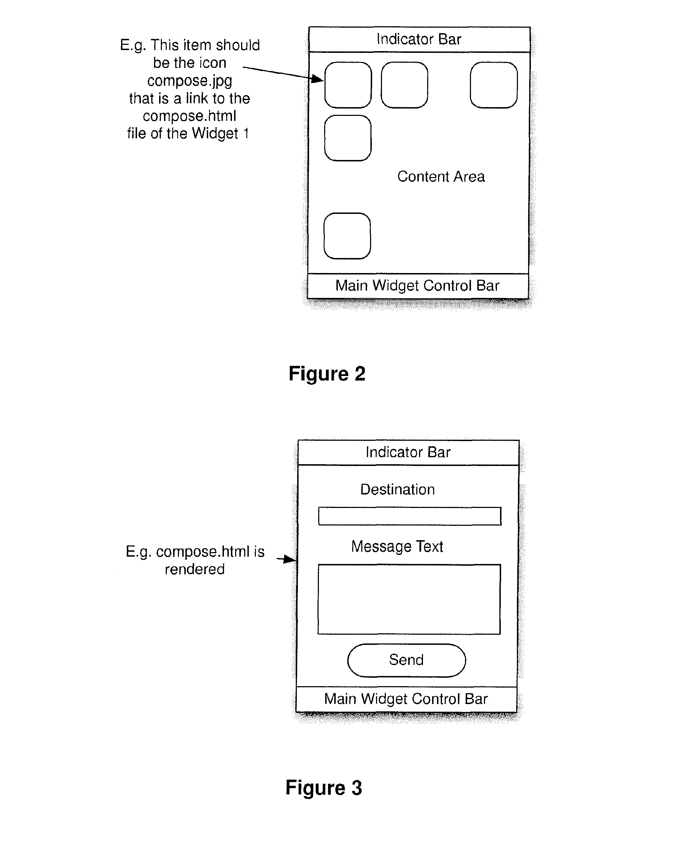

A view of the main page area in an exemplary embodiment is shown in figure 2 (widget 1 will be "compose.html").

**User Selection:** When the user selects one of the icons that corresponds to an entry point of a widget, the main widget renders that new widget in the content area, that is the whole screen with the exception of the indicator area (that is controlled by the OS itself) and the main widget control area, that is always displayed and contains the most important shortcuts.

See for example figure 3, which shows a view of the main page area, when the user selects the "message composed" widget.

**Widget notifications:** When a widget that is executed in the background (e.g. due to an automaticActivaction element) wants to display some information to the end-user the method requestFocus explained above is invoked. When that method is invoked, the widget should pass information (e.g. a DOMString) describing the event received, an image in case graphical information should be displayed and a link that allows end-user to access directly to the detailed information. When a widget invokes the requestFocus method, the main Widget receives an event that contains all the needed information to display an alert, for instance, this could be done in the main widget control area.

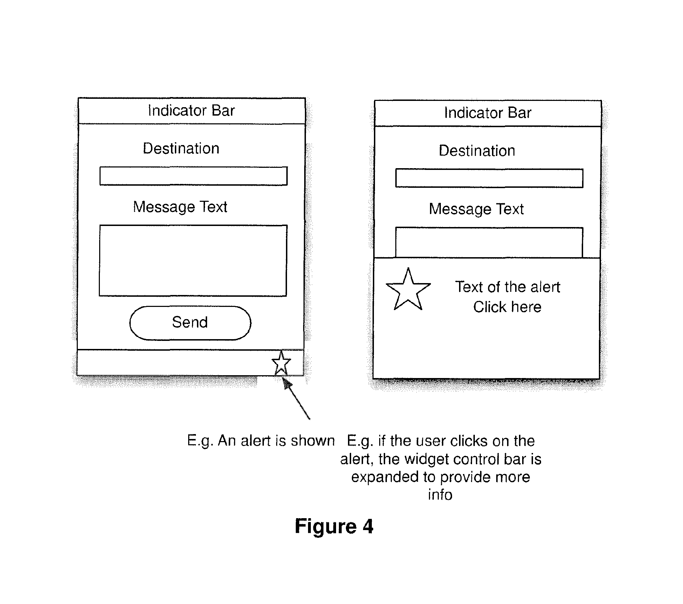

For example, as it can be seen on figure 4, when the requestFocus is invoked, an alert is shown in the widget control bar, and if the user clicks the alert the control bar is expanded to provide more info (for example, a link to provide the text of the alert).

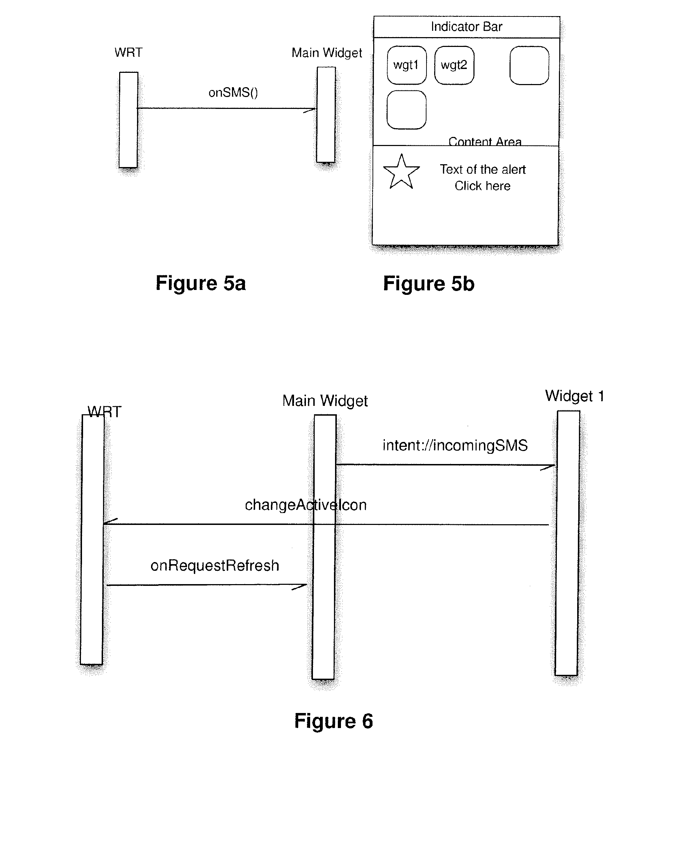

**External events:** The previous section is about widgets sending notifications to other widgets but events not only come from other widgets, but also from external sources (e.g. calls or messages). In case the main widget receives one of the events it is handling, such as incoming SMS from the WRT (figure 5a), it will parse the event information, identify the target widget and update the widget control bar as displayed in figure 5b.

After that, the main widget will ask the target widget to assess the content of the message so that additional actions may be performed. For instance, if a new unread message is available in the inbox, the messaging widget should update their icon to identify its new status. This is done through the changeActivelcon method. When the WRT receives an invocation of that method, it updates the table with the list of entry points, because next time the device is switched on, the updated list of items should be retrieved and shown and invokes the onRequestRefresh function that the main widget should implement (see figure 6). When the onRequestRefresh function of the main widget is invoked, that widget will take care of constructing again the main page area so that the icon linked to accessing the message lists, provides a more accurate information.

Summarizing, This invention allows the definition of the full experience of a device based in simple technologies. As HTML/Widget technology is per-se splitting the User Experience (e.g. Cascade Style Sheets CSS) from the business logic, it is extremely easy to change the User Experience of a device without a minimum effort. As the device experience creation is flexible, it is possible to tailor it with very low effort.

Although the present invention has been described with reference to specific embodiments, it should be understood by those skilled in the art that the foregoing and various other changes, omissions and additions in the form and detail thereof may be made therein without departing from the spirit and scope of the invention as defined by the following claims.

## Claims

1. A method for managing widgets in an electronic processing device, where the widgets are organized in widget packages or suites, where one of the widget in each suite is identified as the suite main widget, where each widget can be launched through different entry points and where each widget has a configuration document with the configuration information of each widget, the method comprising the following steps:
- When the widgets suite is installed, the configuration documents of all the widgets within the suite are parsed and the information about the entry points of each widget and other configuration information which includes an indication whether said widget is the main widget or not, is stored.
- When the device is switched-on, the main widget is the first widget of the suite to be executed and it will be always running in the device, when any other widget is executed the main widget will be still running in the background and will be always accessible on the user interface main page of the device through a main widget control bar
- When it is executed, the main widget retrieves the information about all the entry points of each widget of the suite, the information about the entry points of a widget including the actions that said widget will perform when it is launched using said entry point and whether the widget wants to be shown in the user interface main page or not and which entry point wants the widget to be linked on the user interface main page.
- When the information is successfully retrieved, the main widget builts the user interface main page of the device showing at a content area of the user interface main page, an icon for each widget of the suite which has requested to be shown in the user interface main page according to the information retrieved, the icon being linked to the correspondent entry point of the widget according to the information retrieved, the icon being shown for each widget in the user interface main page in each moment is called active icon
- If a widget wants to change its active icon, the widget sends an instruction including the new active icon that the widget wants to use, and when this instruction is sent, the main widget built again the user interface main page using the new active icon for said widget
- When the user selects one of the icons that corresponds to the entry point of a certain widget, said widget is launched and the main widget built again the main user interface page rendering the selected widget in the content area of the user interface main page.
- When, triggered by certain event, a widget that is executed in the background wants to display some information to the end user, the widget sends an instruction including information describing the event, an image in case graphical information should be displayed and a link that allows end-user to access directly to the event information and the main widget displays on the main widget control bar, an alert indicating the user that said event has happened, the alert being linked to the event information and the image if any is displayed.
- When a communication event is detected, the main widget will parse the event information, detect the target widget of the event, launch the target widget if it is not being executed already, informs the target widget about the event and update the main widget control bar, displaying a link to the event information and the main widget will ask the target widget if further actions must be performed as a result of the communication event.

2. A method according to any of the previous claims where a widget is automatically launched, even without being selected by the user, when a defined interval of time since the device has been switched on has expired.

3. A method according to claim 1, where the communication event being an incoming SMS, an incoming MMS or an incoming call.

4. A method according to claim 1, where the communication event is an incoming SMS or MMS message, the target widget is the message widget and the further action that must be performed is to change the active icon to an icon showing the existence of an unread message and linked to the access of the message lists.

5. A method according to any of the previous claims where the step of retrieving the information about all the available entry points by the main widget is done through a JavaScript method or directly accessing the file system.

6. A method according to any of the previous claims where the content area where the selected widget is shown is the whole page with the exception of the indicator area controlled by the Operating system of the device and the main widget control bar which is always displayed.

7. A method according to any of the previous claims where the widgets may have entry points which are not linked to an HTML resource but to a JavaScript function.

8. A method according to any of the previous claims where the previously mentioned instructions sent by a widget to change the active icon and to display some information to the end user, are JavaScript extensions.

9. A method according to any of the previous claims where the main widget control bar include the most important shortcuts.

10. A method according to any of the previous claims where the electronic processing device can be a personal computer or a mobile phone or a portable computer or a desktop computers or a server or a game device or a media player or a PDA or a TV.

11. A computer program comprising computer program code means adapted to perform the method according to any claims from 1 to 10 when said program is run on a computer, a digital signal processor, a field-programmable gate array, an application-specific integrated circuit, a micro-processor, a micro-controller, or any other form of programmable hardware.
